# EUROPEAN PATENT APPLICATION

(11) **EP 1 840 701 A2**
(43) Date of publication of application: **03.10.2007**
(21) Application number: 07250136.4
(22) Date of filing: 15.01.2007
(51) Int. Cl.: G06F 1/18

(54) **Computer with a case member mounting structure**

(30) Priority: 06.03.2006 CN 200610051581
(71) Applicant: ASUSTeK Computer Inc., Peitou, Taipei City (TW)
(72) Inventor: Lin, Chien-Chen, Peitou Taipei City (TW)
(74) Representative: Tranter, Andrew David

(57) **Abstract**

A computer with a case member mounting structure includes a first case member, a second case member, a slide, a spring member, and an operation lever. The first case member has at least one opening. The second case member includes at least one first retaining member. The slide is movably supported on the first case member. The push portion of the first retaining member is inserted into the opening for pushing the slide to move in a first direction to a first position so that the hooked portion of the first retaining member is engaged with the opening. The operation lever is pivoted to the first case member. When the operation lever is rotated to a second position, the operation lever pushes the slide to move in the first direction, so as to disengage the hooked portion from the opening.

## Description

### BACKGROUND OF THE INVENTION

### 1. Field of the Invention

The present invention relates to a case member mounting structure and more particularly to a computer with a case member mounting structure.

### 2. Description of Related Art

The mainframe of a commercial desktop computer generally comprises a case, a motherboard, a CPU, memory means, a hard disk drive, an optical disc device, a power adapter, and etc. The case includes a case body and a top cover. The case body houses the CPU, the memory means, the hard disk drive, the optical disc device, the power adapter, and etc. The top cover is covered on the case body.

According to conventional designs, the case body and top cover of the case of a computer are fastened together with screws, or screws and nuts. When the user or maintenance engineer wishes to add an additional component part, for example, a hard disk to expand storage capacity or to repair the motherboard, a screwdriver shall be used to unfasten the screws so that the top cover can be opened from the case body After installation of the new component part or after the repair work is done, the user or repair engineer must fasten up the screws to affix the top cover to the case body again. This mounting/dismounting procedure is complicated and wastes a lot of time. Further, the threads of the screws wear quickly with use. When the threads of the screws are damaged, is becomes more difficult to detach the top cover from the case body, Therefore, this computer case mounting design is not satisfactory in function.

Further, there are computer case designs in which the case body and the top cover use hooks and hook holes for connection, and a button for disconnection control. However, the hooks and the hook holes may be fastened too tight. In this case, the user must press the button and pull the case body and the top cover apart with much effort. If the hooks are not tightly hooked in the associating hook holes, the top cover may be forced away from the case body accidentally.

Therefore, it is desirable to provide a case member mounting structure that eliminates the aforesaid drawbacks.

### SUMMARY OF THE INVENTION

The computer with a case member mounting structure of the present invention comprises a first case member, a second case member, a slide, a spring member, and an operation lever. The first case member has at least one opening. The second case member includes at least one first retaining member which has a hooked portion and a push portion. The slide is movably supported on the first case member. The slide has at least one second retaining member. The push portion of the first retaining member is inserted into the opening for pushing the slide to move in a first direction to a first position so that the hooked portion of the first retaining member is engaged with the opening. The operation lever is pivoted to the first case member. When the operation lever is rotated to a second position, the operation lever pushes the slide to move in the first direction, so as to disengage the hooked portion from the opening. The spring member is connected between the first case member and the slide and imparts a pull force to the slide in a second direction.

By means of the aforementioned arrangement, the first case member and the second case member are locked without screws. Further, by means of turning the operation lever with one single hand or pushing the first case member inwards, the first case member and the second case member are unlocked or locked. Because the invention employs the lever principle, it requires less effort to unlock the first case member and the second case member.

Further, the slide has a second contact portion, and the operation lever has a first contact portion kept in contact with the second contact portion of the slide and disposed between the second contact portion and the spring member.

The first contact portion of the operation lever stops the slide in a third position when the pull force is pulling the slide in the second direction. The operation lever is closely attached to the second case member when the slide is in the third position.

Further, when the operation lever is in the second position, the first contact portion of the operation lever is stopped against the second contact portion of the slide and forced to push the slide in a first direction. The first contact portion of the operation lever can be a stop rod, and the second contact portion of the slide can be a stop plate. The operation lever further has a third contact portion. The second case member has a fourth contact portion movable with the third contact portion of the operation lever. The fourth contact portion of the second case member can be a handlebar, and the third contact portion of the operation lever can be a smoothly arched plate adapted to move the fourth contact portion of the second case member when the operation lever is turned relative to the first case member. The first case member further has at least one sliding groove adapted to receive and guide movement of the slide. The at least one second retaining member of the slide each is a narrow elongated slot, and the at least one opening of the first case member each is a narrow elongated slot.

### BRIEF DESCRIPTION OF THE DRAWINGS

FIG. 1 is an exploded view of a case member mounting structure in accordance with the preferred embodiment of the present invention.
FIG. 2 is a perspective assembly view of the case member mounting structure in accordance with the preferred embodiment of the present invention.
FIG. 3 illustrates the case member mounting structure used in a computer mainframe according to the preferred embodiment of the present invention.
FIG. 4 is a schematic top view of the present invention, showing the status of the present invention before engagement between the first case member and the second case member according to the preferred embodiment of the present invention.
FIG. 5 is a schematic top view of the present invention, showing the first case member and the second case member engaged together according to the preferred embodiment of the present invention.
FIG. 6 is a schematic top view showing the status of the present invention when the operation lever is turned to an angle corresponding to a second position according to the preferred embodiment of the present invention.
FIG. 7 is a schematic top view of the present invention, showing the first case member unlocked from the first case member according to the preferred embodiment of the present invention.

### DETAILED DESCRIPTION OF THE PREFERRED EMBODIMENT

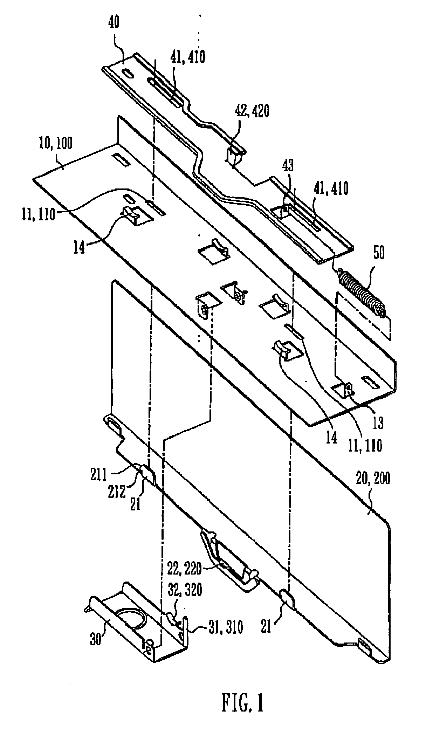

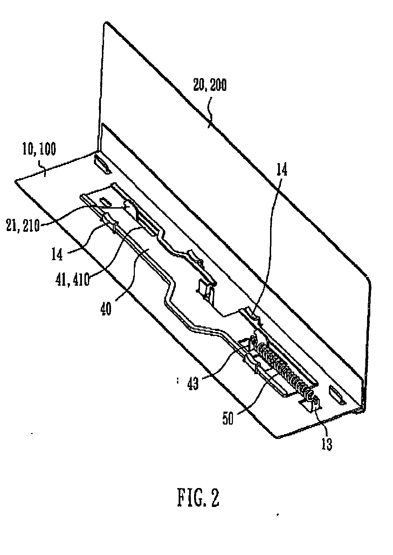

Referring to FIGS. 1 and 2, a case member mounting structure in accordance with the preferred embodiment of the present invention is shown. The case member mounting structure includes a first case member **10,** a second case member **20,** a slide **40,** an operation lever **30,** and a spring member **50.**

As shown in FIG 1, the first case member **10** has two openings **11,** four sliding grooves **14,** and a first locating portion **13,** wherein the sliding grooves **14** are alternatively arranged in two lines on the first case member **10.** The first locating portion **13** is disposed near one end of the first case member **10** for the hooking of one end of the spring member **50.**

Further, the second case member **20** has first retaining members **21** corresponding to the openings **11** of the first case member **10,** and a fourth contact portion **22.** Each first retaining member **21** has a push portion **211** insertable into one opening **11,** and a hook portion **212** protruding from the push portion **211** for hooking on the periphery of the associating opening **11.**

Further, as shown in FIG. 1, the slide **40** is mounted on the first case member **10** corresponding to the four sliding grooves **14.** The sliding grooves **14** are adapted to movement of the slide **40** relative to the first case member **10** stably in a predetermined path. The slide **40** includes second retaining members **41,** a second locating portion **43,** and a second contact portion **42.** The second retaining members **41** are set corresponding to the openings **11** of the first case member **10.** The second locating portion **43** is disposed near a middle part of the slide **40** for the hooking of the other end of the spring member **50.**

Referring to FIG. 1 again, the operation lever **30** is pivoted to the first case member **10,** having a first contact portion **31** and a third contact portion **32.** The first contact portion **31** is disposed at one end of the operation lever **30** and is located between the spring member **50** and the contact portion **42** of the slide **40.** The third contact portion **32** is formed on the operation lever **30** corresponding to the fourth contact portion **22** of the second case member **20.** Further, the spring member **50** has two ends respectively fastened to the first locating portion **13** of the first case member **10** and the second locating portion **43** of the slide **40.**

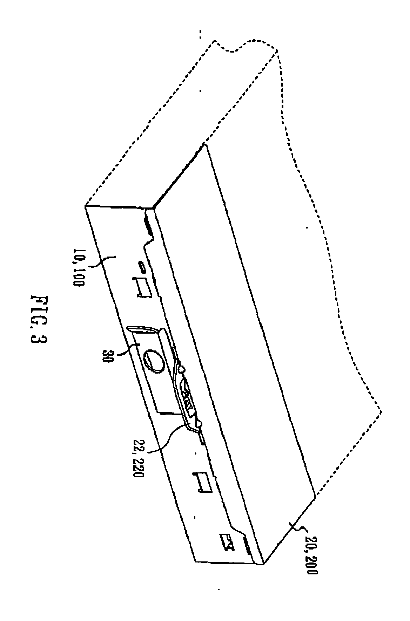

Referring to FIG. 3 and FIG. 2 again, the first case member **10** provided by this embodiment is the case body **100** of a computer mainframe. The second case member **20** is the top cover **200** of a computer mainframe. As shown in FIG. 1, in this embodiment, the first contact portion **31** of the operation lever **30** is a stop rod **310;** the second contact portion **42** of the slide **40** is a stop plate **420;** the third contact portion **32** of the operation lever **30** is an arched plate **320;** the fourth contact portion **22** of the second case member **20** is a handlebar **220;** the openings **11** of the first case member **10** are narrow elongated slots **110;** the second retaining members **41** of the slide **40** are narrow elongated slots **410.**

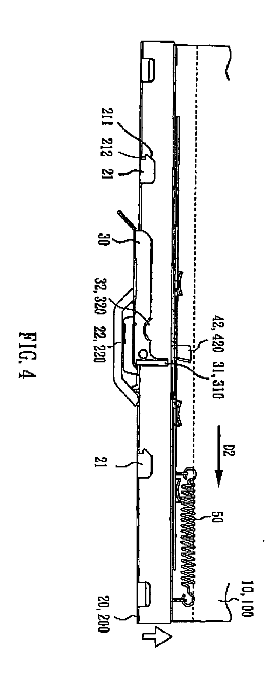

The operation of the preferred embodiment of the present invention is outlined hereinafter with reference to FIGS. 4~7 and FIG. 1 again. Referring to FIGS. 1 and 4, before engagement between the hooked portions **212** of the first retaining members **21** of the second case member **20** with the associating openings **11** of the first case member **10,** the spring member **50** imparts a pull force to the slide **40** in a second direction **D2** toward the spring member **50.**

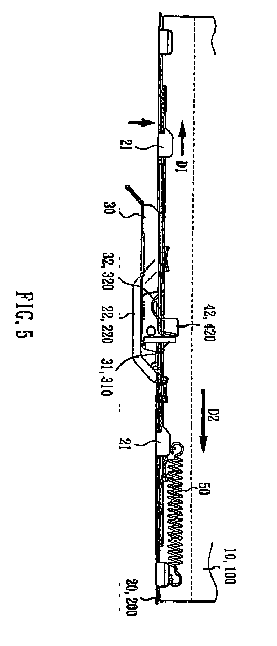

Referring to FIGS. 1 and 5, when the push portion **211** of each first retaining member **21** of the second case member **20** is respectively inserted into the openings **11** of the first case member **10,** the push portion **211** of each first retaining member **21** of the second case member **20** is respectively forced against the second retaining members **41** of the slide **40,** causing the slide **40** to move in a first direction **D1** apart from, the spring member **50.** When the slide **40** reached a first position, the hooked portion **212** of each first retaining member **21** of the second case member **20** is respectively forced into engagement with the periphery of the associating opening **11** of the first case member **10,** and therefore the first case member **10** and the second case member **20** are secured together. At this time, the spring member **50** imparts a pull force to the slide **40** to pull the slide **40** in the second direction **D2,** and the first contact portion **31** of the operation lever **30** is stopped against the second contact portion **42** of the slide **40** to stop the slide **40** from moving in the second direction **D2** and to hold the slide **40** in the third position (see FIG. 5), i.e., the spring member **50** is stretched and the operation lever **30** is closely attached to the second case member **20** at this time.

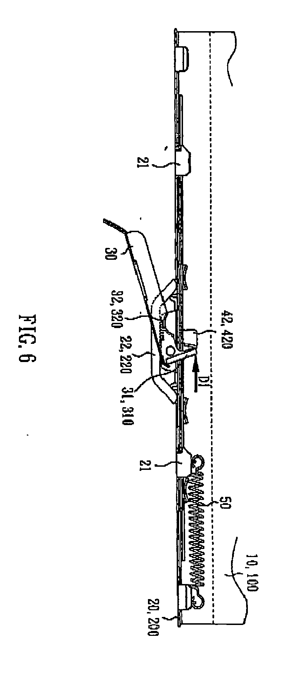

Referring to FIGS. 1 and 6, when the operation lever **30** is turned to an angle corresponding to a second position (see FIG 6), the first contact portion **31** of the operation lever **30** is forced against the second contact portion **42** of the slide **40** to move the slide **40** in the first direction **D1** to the first position, i.e., to disengage the hooked portions **212** of the first retaining members **21** of the second case member **20** from the openings **11** of the first case member **10.** At this time, the third contact portion **32** of the operation lever **30** does not touch the fourth contact portion **22** of the second case member **20,** and the spring member **50** is stretched further (i.e., the length of the spring member **50** at this time is longer than the length in FIG. 5 where the first case member **10** and the second case member **20** are locked).

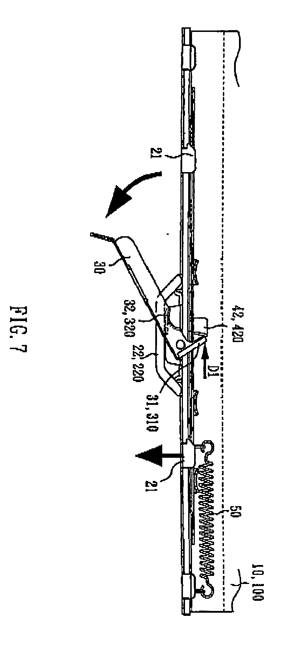

Referring to FIGS. 1 and 7, when the operation lever **30** is turned to an angle greater than that at the second position, the third contact portion **32** of the operation lever **30** is disposed in contact with the fourth contact portion **22** of the second case member **20,** and the hooked portions **212** of the first retaining members **21** of the second case member **20** are kept apart from the openings **11** of the first case member **10.** Therefore, by means of the third contact portion **32** of the operation lever **30** to push the fourth contact portion **22** of the second case member **20,** the second case member **20** is unlocked from the first case member **10.**

Therefore, the first case member **10** and the second case member **20** can be locked without screws. Further, simply by operating the operation lever **30** with one single hand, the user can conveniently unlock the first case member **10** and the second case member **20.** By means of the lever principle, the user can operate the operation lever **30** to unlock the first case member **10** and the second case member **20** with less effort.

Although the present invention has been explained in relation to its preferred embodiment, it is to be understood that many other possible modifications and variations can be made without departing from the spirit and scope of the invention as hereinafter claimed.

## Claims

1. A computer with a case member mounting structure comprising:
a first case member, having at least one opening;
a second case member, including at least one first retaining member having a hooked portion and a push portion;
a slide movably supported on the first case member, the slide having at least one second retaining member, the push portion of the first retaining member being inserted into the opening for pushing the slide to move in a first direction to a first position so that the hooked portion of the first retaining member is engaged with the opening;
an operation lever pivoted to the first case member, when the operation lever is rotated to a second position, the operation lever pushing the slide to move in the first direction, so as to disengage the hooked portion from the opening; and
a spring member connected between the first case member and the slide and imparting a pull force to the slide in a second direction.

2. The computer with a case member mounting structure as claimed in claim 1, wherein the slide has a second contact portion, and the operation lever has a first contact portion kept in contact with the second contact portion of the slide and disposed between the second contact portion and the spring member.

3. The computer with a case member mounting structure as claimed in claim 2, wherein the first contact portion of the operation lever stops the slide in a third position when the slide is pulled by the pull force in the second direction.

4. The computer with a case member mounting structure as claimed in claim 3, wherein the operation lever is closely attached to the second case member when the slide is in the third position.

5. The computer with a case member mounting structure as claimed in claim 2, wherein when the operation lever is in the second position, the first contact portion of the operation lever is stopped against the second contact portion of the slide and forced to push the slide.

6. The computer with a case member mounting structure as claimed in claim 2, wherein the first contact portion of the operation lever is a stop rod, and the second contact portion of the slide is a stop plate.

7. The computer with a case member mounting structure as claimed in claim 1, wherein the operation lever further has a third contact portion, and the second case member has a fourth contact portion movable with the third contact portion of the operation lever.

8. The computer with a case member mounting structure as claimed in claim 7, wherein the fourth contact portion of the second case member is a handlebar, and the third contact portion of the operation lever is a smoothly arched plate adapted to move the fourth contact portion of the second case member when the operation lever is turned relative to the first case member.

9. The computer with a case member mounting structure as claimed in claim 1, wherein the first case member further has at least one sliding groove adapted to receive and guide movement of the slide.

10. The computer with a case member mounting structure as claimed in claim 1, wherein the at least one second retaining member of the slide each is a narrow elongated slot.
